# EUROPEAN PATENT APPLICATION

(11) **EP 4 745 062 A1**
(43) Date of publication of application: **20.05.2026**
(21) Application number: 24842799.9
(22) Date of filing: 01.05.2024
(51) Int. Cl.: B65G 47/14

(54) **CONVEYANCE MEMBER AND COMPONENT SUPPLY DEVICE**

(30) Priority: 20.07.2023 JP 2023118618
(71) Applicant: Seki Kogyo Co., Ltd., Hatsukaichi-shi, Hiroshima, 738-0034 (JP)
(72) Inventor: MIURA, Masaaki, Hatsukaichi-shi, Hiroshima 738-0034 (JP); SAKOTA, Kouji, Hatsukaichi-shi, Hiroshima 738-0034 (JP); MIURA, Seiji, Hatsukaichi-shi, Hiroshima 738-0034 (JP)
(74) Representative: Germain Maureau
(86) International application number: PCT/JP2024/016802
(87) International publication number: WO 2025/017999

(57) **Abstract**

A conveyance member includes: a resin member with a conveyance passage formed therein through which a predetermined component is conveyed; and a long plate member arranged in the conveyance passage along the longitudinal direction of the conveyance passage. The long plate member deforms according to the shape of the conveyance passage so that the component slides and moves on the surface of the long plate member in the conveyance member.

## Description

### TECHNICAL FIELD

The present disclosure relates to a conveyance member and a component supply device.

### BACKGROUND ART

A bolt supply device described in Patent Document 1 includes a reservoir for storing a plurality of nuts and a hose that conveys the bolts. One end of the hose is connected to the reservoir and the other end is connected to a fastening device to which a nut is to be supplied. The hose is arranged to curve in an upward parabolic shape between the reservoir and the fastening device. The bolt in the reservoir is press-fed through the hose by the injection device and supplied to the fastening device.

### CITATION LIST

### PATENT DOCUMENT

Patent Document 1: Japanese Unexamined Patent Publication No. 2021-178725

### SUMMARY OF THE INVENTION

### TECHNICAL PROBLEM

The hose of such a component supply device is made of a resin material that is deformable and relatively lightweight. Therefore, the reservoir and the fastening device can be relatively freely installed by deforming the hose.

However, when the component is a metal component having a protrusion or a sharp portion such as a nut, the inner surface of the hose may be damaged by the component moving inside the hose. In particular, when the hose is curved, the components are more likely to contact the inner surface of the hose at the curved portion, and continuously conveying a plurality of components exacerbates the deterioration of the curved portion of the hose. Further, when a relatively long hose is used, frictional resistance caused by the components sliding along the inner surface of the hose reduces the conveying speed of the components, which may consequently cause the components to clog inside the hose.

The present disclosure has been made in view of the above-described circumstances, and an object of the present disclosure is to provide a conveyance member for components that can suppress internal damage caused by conveyance of the components.

### SOLUTION TO THE PROBLEM

To achieve the above object, the present invention provides a long plate member in the conveyance member.

Specifically, a first aspect is directed to a conveyance member including: a resin member with a conveyance passage formed therein through which a predetermined component is conveyed; and a long plate member arranged in the conveyance passage along a longitudinal direction of the conveyance passage. The long plate member is deformed according to a shape of the conveyance passage so that the component slides and moves on a surface of the long plate member in the conveyance passage.

In the first aspect, the component slides on the long plate member, which suppresses direct contact of the component with the surface of the conveyance passage made of the resin member. This enables suppression of damage to the surface of the conveyance passage caused by the component.

A second aspect is directed to an embodiment of the first aspect. In the second aspect, the resin member is made of a flexible material, and the long plate member is made of a material that is harder than the material of the resin member and is elastically deformable.

The long plate member needs to change its shape according to the shape of the conveyance member. However, if the long plate member is not elastically deformable, it cannot flexibly change its shape to match that of the conveyance member. However, in the second aspect, the long plate member is made of an elastically deformable material. Therefore, for example, even when the long plate member is bent, it can be kept from maintaining that bent shape. Therefore, even if the shape of the conveyance member is changed, the shape of the long plate member can be changed accordingly. In addition, since the long plate member is made of a material harder than the resin member constituting the conveyance passage, it is possible to suppress frictional resistance when the component slides on the long plate member and to suppress a decrease in the conveying speed of the component.

A third aspect is directed to an embodiment of the first or second aspect. In the third aspect, the component has a protrusion that projects from a surface of the component, and the long plate member is arranged in the conveyance passage so that the protrusion contacts the surface of the long plate member while the component is conveyed in the conveyance passage.

In the third aspect, particularly when the component has a protrusion, there is a risk that the protrusion will come into contact with the surface of the conveyance passage and damage the surface of the conveyance passage.

A fourth aspect is directed to an embodiment of any one of the first to third aspects. In the fourth aspect, the conveyance passage is provided with a fixing structure that fixes the long plate member.

In the fourth aspect, the long plate member can be fixed to the conveyance passage. As a result, for example, if the long plate member is fixed to the surface of the conveyance passage, it is possible to suppress lift-off of the long plate member from the surface. This enables suppression of clogging of the components within the conveyance passage.

A fifth aspect is directed to an embodiment of the fourth aspect. In the fifth aspect, the fixing structure is a recessed groove formed so that at least one end of the long plate member is inserted therein, as viewed in cross section along a plane orthogonal to the longitudinal direction of the conveyance passage.

In the fifth aspect, the long plate member can be easily fixed to the conveyance passage by simply inserting it into the recessed groove. Further, since it only needs to form the recessed groove inside the conveyance passage, the fixing structure can be easily formed.

A sixth aspect is directed to a component supply device including the conveyance members of any one of the first to the fifth aspects and is configured to supply the component to a predetermined target position.

A seventh aspect is directed to an embodiment of the sixth aspect. In the seventh aspect, the conveyance member is arranged to extend in an up-down direction, and an outlet end of the conveyance member is arranged so that the component is supplied to the predetermined target position.

In the seventh aspect, the component can be conveyed within the conveyance member by gravity. This eliminates the need for air pressure feeding device or the like.

### ADVANTAGES OF THE INVENTION

As described hereinabove, when components pass through the conveyance passage that is a resin member, the components slide on the surface of the long plate member provided on the inner surface of the conveyance passage. Therefore, contact of the components with the inner surface of the conveyance passage can be suppressed. This makes it possible to suppress damage to the inner surface of the conveyance passage caused by the passage of components, thereby reducing the frequency of replacement and repair of the conveyance member and lowering the maintenance costs of the conveyance member.

### BRIEF DESCRIPTION OF THE DRAWINGS

[FIG. 1] FIG. 1 is a schematic view of a configuration of a resistance welder and a nut supply device according to the present embodiment.
[FIG. 2] FIG. 2 is a vertical cross-sectional view of a configuration of a lower electrode unit.
[FIG. 3] FIG. 3 is a three dimensional perspective view of a nut.
[FIG. 4] FIGS. 4A to 4C are each a view of a configuration and an operation of a feeder. FIG. 4A is a view of a state in which nuts are supplied to the feeder. FIG. 4B is a view of a state in which a supply rod is extended. FIG. 4C is a view of a state where a piston rod is extended.
[FIG. 5] FIG. 5 is a view of a cross section along longitudinal direction of a conveyance hose.
[FIG. 6] FIG. 6 is a sectional view taken along line VI-VI in FIG. 5, illustrating a state in which a nut passes through the conveyance hose.
[FIG. 7] FIG. 7 is a view corresponding to FIG. 6, illustrating a state in which a nut passes through the conveyance hose according to a variation.
[FIG. 8] FIG. 8 is a view corresponding to FIG. 1, illustrating a configuration of the nut supply device according to another embodiment.
[FIG. 9] FIG. 9 is a view corresponding to FIG. 6, illustrating a nut according to another embodiment passing through the conveyance hose.

### DETAILED DESCRIPTION

Embodiments of the present invention will be described below with reference to the drawings. The following embodiments are essentially preferred illustrations and are not intended to limit the scope, applications, or uses of the present invention. Further, each configuration of the embodiments, variations, other examples, and the like described below may be appropriately combined or partially replaced within a scope in which the present invention can be implemented.

### (1) Nut Resistance Welder

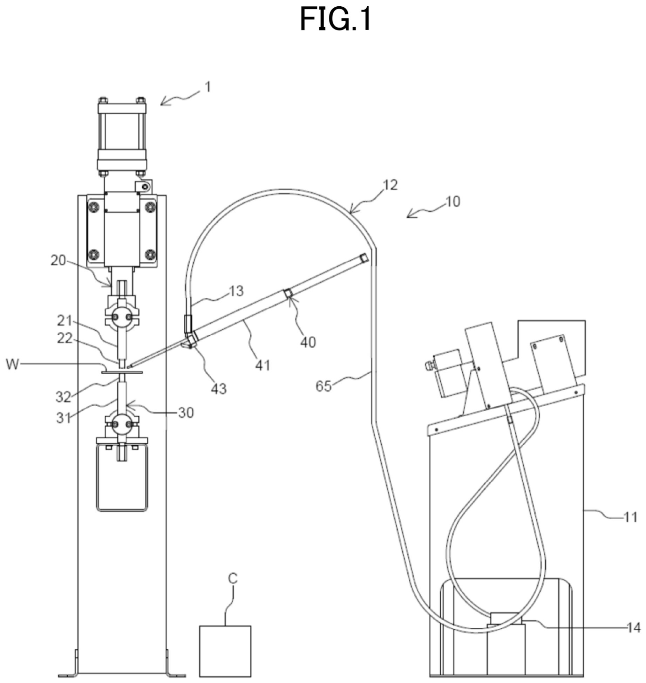

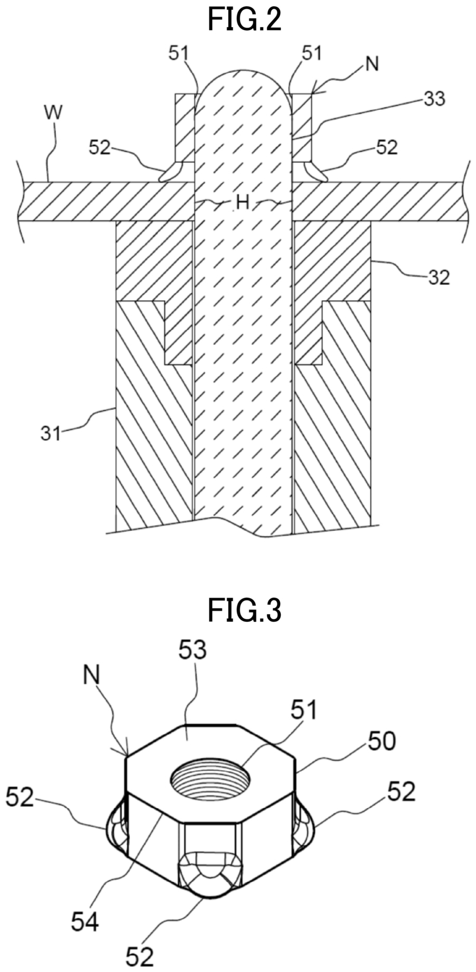

As shown in FIGS. 1 and 2, a nut supply device (10) of the present embodiment is applied to a resistance welder (1). The nut supply device (10) is an example of a component supply device (10) of the present disclosure. A resistance welder (1) welds a workpiece (W) and a nut (N) by an electrode. The workpiece (W) is, for example, a metal plate-like member. The nut (N) is an example of a component of the present disclosure. The resistance welder (1) includes an upper electrode unit (20), a lower electrode unit (30), a nut supply device (10), and a controller (C).

### (1-1) Upper Electrode Unit

The upper electrode unit (20) includes a first holder (21) and an upper electrode (22). The first holder (21) is formed in a generally cylindrical shape extending in an up-down direction. The first holder (21) is configured to be movable in the up-down direction. The first holder (21) holds the upper electrode (22). The upper electrode (22) is arranged at the lower end of the first holder (21). The upper electrode (22) moves in the up-down direction together with the first holder (21).

### (1-2) Lower Electrode Unit

As illustrated in FIG. 2, the lower electrode unit (30) includes a second holder (31), a lower electrode (32), and a guide pin (33). The second holder (31) is formed in a generally cylindrical shape extending in an up-down direction. At the upper end of the second holder (31), the lower electrode (32) is arranged.

The lower electrode (32) is provided so as to cover the upper end of the second holder (31). The upper end of the lower electrode (32) constitutes a placement surface on which a workpiece (W) is placed. At the center of the lower electrode (32), an opening into which the guide pin (33) is inserted is formed.

The guide pin (33) moves in the up-down direction in the second holder (31). The guide pin (33) is a member that positions the nut (N). Specifically, the workpiece (W) has a hole (H) penetrating in the thickness direction, and the workpiece (W) is placed on the lower electrode (32) such that the guide pin (33) is inserted into the hole (H). The upper end of the guide pin (33) protrudes from the workpiece (W) placed on the lower electrode (32), and the nut (N) is supplied onto the workpiece (W) such that a threaded hole (51) of the nut (N) fits over the upper end of the guide pin. In this way, the guide pin (33) positions the nut (N) supplied on the workpiece (W).

### (2) Nut Supply Device

The nut supply device (10) supplies the nut (N) to a welding position of the workpiece (W), which is a predetermined target position. Specifically, the nut (N) is supplied by the nut supply device (10) onto the guide pin (33) protruding from the workpiece (W) arranged on the lower electrode unit (30). The nut supply device (10) is an example of a component supply device (10) of the present disclosure.

As illustrated in FIG. 3, the nut (N) is a rectangular weld nut. The nut (N) has a threaded hole (51) formed at the center of a square prism-shaped main body (50). The nut (N) has protrusions (52) for welding. The protrusions (52) are formed to protrude outward in diagonal directions from the respective vertices at the four corners of the bottom surface of the main body (50). The protrusions (52) are so-called projections. The outer edge (54) of the upper surface (53) of the nut (N) is formed with a sharp corner.

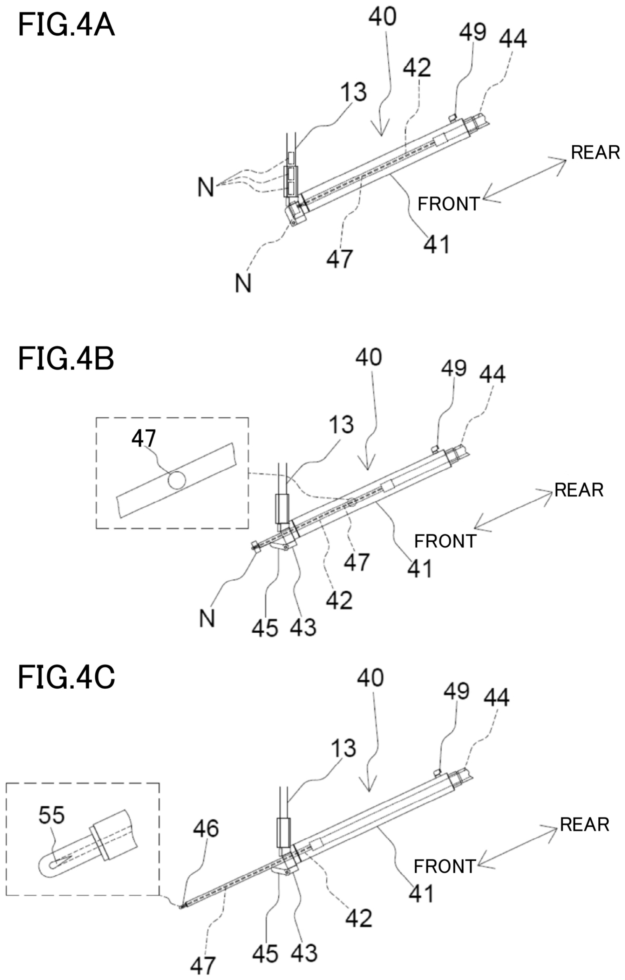

As illustrated in FIGS. 1 and 4, the nut supply device (10) includes an aligning and feeding machine (11), a conveyance hose (12), a supply chute (13), a pressure feeding device (14), and a feeder (40).

The aligning and feeding machine (11) is connected to one end of the conveyance hose (12). The aligning and feeding machine (11) stores the nuts (N) and aligns the plurality of nuts (N) so that the nuts (N) are sequentially supplied one by one to the conveyance hose (12). The aligning and feeding machine (11) includes a pressure feeding device (14) that pressure-feeds the nuts (N) supplied to the conveyance hose (12) to a supply header (43). The pressure feeding device (14) feeds air having a predetermined pressure from one end of the conveyance hose (12). The nuts (N) are conveyed to an outlet end, which is the other end of the conveyance hose (12), by the pressure of air (air pressure) blown out from the pressure feeding device (14).

The conveyance hose (12) has a resin member (65) having a hollow interior. The resin member (65) has a conveyance passage (60) formed therein, through which the nut (N) is conveyed. The resin member (65) is made of a flexible material. That is, the conveyance hose (12) is deformable. The nuts (N) are conveyed from an inlet end, which is one end of the conveyance hose (12), toward the outlet end. The outlet end of the conveyance hose (12) is arranged so that the nuts (N) are fed to the welding position. The length of the conveyance hose (12) is not particularly limited, and is, for example, 2 m to 10 m. The conveyance hose (12) is an example of the conveyance member (12) of the present disclosure. The conveyance hose (12) will be detailed later.

The supply chute (13) supplies the nuts (N) to the feeder (40) with the threaded holes (51) facing in a direction orthogonal to the traveling direction of the nuts (N). One end of the supply chute (13) is connected to the other end of the conveyance hose (12). The other end of the supply chute (13) extends downward from above and is arranged above a later-described supply header (43). In other words, the nuts (N) passing through the supply chute (13) are supplied downward to the supply header (43) from above.

As shown in FIGS. 4A to 4C, the feeder (40) includes a rod holder (41), a supply rod (42), a supply header (43), and a piston rod (44).

The rod holder (41) is a tubular member that accommodates therein the supply rod (42). The rod holder (41) extends obliquely upward from a vicinity of the lower end of the supply chute (13). In other words, one end of the rod holder (41) is arranged near the lower end of the supply chute (13), and the other end of the rod holder (41) extends obliquely upward from the one end of the rod holder (41). The rod holder (41) is fixed by a fixing member (not shown).

The supply rod (42) is a pipe-shaped member that moves inside the rod holder (41). Specifically, the supply rod (42) moves in the rod holder (41) by the operation of an air cylinder (not shown) connected to the other end of the rod holder (41). This causes the distal end of the supply rod (42) to advance from or retract into one end of the rod holder (41). The supply rod (42) travels in the same direction as the cylindrical axis direction of the rod holder (41). That is, the supply rod (42) advances obliquely downward and retreats obliquely upward. To the distal end of the supply rod (42), a distal end pin (46) that holds a nut (N) is provided. The distal end pin (46) has an air outlet (55) through which air is blown (see an enlarged view encircled by a broken line in FIG. 4C).

The supply header (43) is a member that holds the nuts (N) supplied from the supply chute (13). The supply header (43) has a box-like shape with an open top. The supply header (43) has a lid (45) that can be opened and closed. The lid (45) forms a front wall of the supply header (43).

The piston rod (44) is a rod-shaped member that moves inside the supply rod (42). The piston rod (44) is provided at the distal end of the supply rod (42). The operation of the air cylinder causes the distal end of the piston rod (44) to advance from or retract into the distal end of the supply rod (42) within the supply header (43).

### (3) Controller

The controller (C) shown in FIG. 1 includes a microprocessor, an electric circuit, and an electronic circuit. The microprocessor includes a central processing unit (CPU), a memory, a communication interface, an analog input/output, and a contact input/output interface. The memory stores various programs to be executed by the CPU and data to be used by the programs.

The controller (C) controls various devices of the resistance welder (1) and the nut supply device (10). For example, the controller (C) controls elevation of the upper electrode (22) and the guide pin (33), energization of the upper electrode (22) and the lower electrode (32), extension and contraction of the supply rod (42) and the piston rod (44), operation of the aligning and feeding machine (11) and the pressure feeding device (14), and the like. The controller (C) may control various devices based on a predetermined input signal based on an operation by an operator.

### (4) Operation of Nut Supply Device (10) and Resistance Welder

Next, an example of the operation of the nut supply device (10) and the resistance welder (1) will be described with reference to FIG. 4. The nuts (N) in the aligning and feeding machine (11) of the present embodiment are fed one by one to one end of the conveyance hose (12) and are pressure-fed to the other end of the conveyance hose (12). The nut (N) is held by the supply header (43) through the supply chute (13) connected to the other end of the conveyance hose (12). The supply header (43) holds a single nut (N). In the supply header (43), the nut (N) is temporarily fixed with the center of the threaded hole (51) and the axial center of the supply rod (42) coinciding with each other. Since the lid (45) is in a closed state, the nut (N) does not fall from the supply header (43) (see FIG. 4A).

The rod holder (41) is filled with air via a first air port (49) provided on a side surface of the rod holder (41). Air supplied from the side surface of the rod holder (41) is guided to the distal end pin (46) of the supply rod (42) through a second air port (47) provided in the supply rod (42). The distal end pin (46) fits into the threaded hole (51) of the nut (N), and holds the nut (N) by air blown out from the air outlet (55) of the distal end pin (46). The piston rod (44) advances while the distal end pin (46) holds the nut (N). At this time, the nut (N) held by the distal end pin (46) pushes the lid (45) away to open the lid (see FIG. 4B).

After that, the piston rod 44 continuously advances to move the nut (N) to the welding position. The nut (N) is then arranged from the distal end pin (46) to the welding position (see FIG. 4C). At this time, the upper end of the guide pin (33) is inserted into the threaded hole (51) of the nut (N), which suppresses displacement of the nut (N) from the welding position. The piston rod (44) is then retracted in preparation for holding the next nut (N).

The upper electrode (22) is lowered toward the nut (N) arranged on the workpiece (W), and the upper electrode (22) and the lower electrode (32) sandwich the nut (N) and the workpiece (W). The energization of the upper electrode (22) and the lower electrode (32) causes the protrusion (52) of the nut (N) to melt due to high temperature, thereby welding the nut (N) to the workpiece (W). At this time, the guide pin (33) may or may not be lowered.

### (5) Problems Relating to Conveyance Hose

The conveyance hose is made of a resin having flexibility for its deformability and case of handling. Since the nuts and bolts for welding are metal components that are harder than resin, when such metal components are conveyed in the conveyance hose, corners or protrusions of the upper surfaces (53) of the nuts (N), which are such components, rub against the inner surface of the conveyance hose, which may damage or deteriorate the inner surface of the conveyance hose.

Further, in terms of workability of an operator and layout of an apparatus to be arranged, the resistance welder and the aligning and feeding machine are sometimes installed several meters or more apart from each other, in which case a relatively long conveyance hose is required. When the conveyance hose becomes longer, the moving distance of the metal component moving in the conveyance hose also becomes longer, and the conveyance time during which the metal component is conveyed in the conveyance hose also becomes longer. When the metal component contacts the inner surface of the conveyance hose, the conveying speed of the metal component is lowered and the conveyance time is prolonged due to the frictional resistance. Further, if the air pressure of the pressure feeding device is not sufficient, the metal component may stop in the middle of the conveyance hose, thus causing clogging. Therefore, the air pressure of the pressure feeding device needs to be increased; however, in that case, the output of the pressure feeding device increases, resulting in an increased operating load and increased power consumption.

### (6) Conveyance Hose

The conveyance hose (12) of the present embodiment includes a long plate member (70) arranged in the conveyance passage (60) along the longitudinal direction of the conveyance passage (60). The long plate member (70) is deformed according to the shape of the conveyance passage (60) so that the nuts (N) slide and move on the surface of the long plate member (70) in the conveyance passage (60).

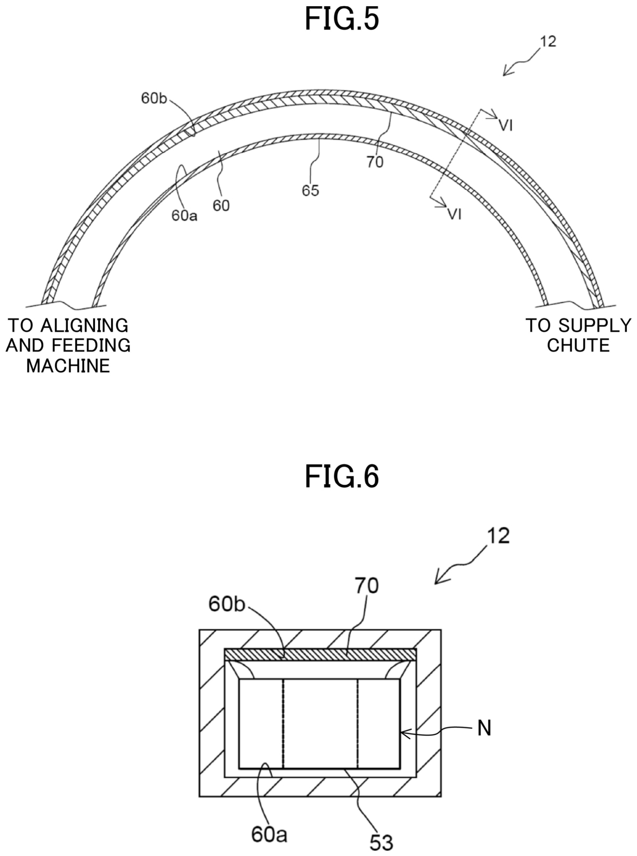

As illustrated in FIGS. 5 and 6, the conveyance hose (12) of the present embodiment is curved in an arc shape between the aligning and feeding machine (11) and the supply chute (13). The conveyance hose (12) is a rectangular tube and is formed so that the cross-sectional shape of the passage is generally rectangular. That is, the conveyance passage (60) is formed by four inner surfaces. The nut (N) is conveyed in the conveyance passage (60) in a posture such that the threaded hole (51) is orthogonal to the conveying direction.

The long plate member (70) is made of a material that is harder than the material of the resin member and is elastically deformable. Specifically, the long plate member (70) of the present embodiment is made of an elastically deformable metal material. The long plate member (70) is formed in a thin plate shape. The long plate member (70) is provided in the conveyance passage (60) from one end to the other end of the conveyance hose (12). The long plate member (70) is arranged so that the protrusion (52) contacts the surface of the long plate member (70) while the nut (N) is conveyed in the conveyance passage (60).

Specifically, in a cross section along the passage direction of the conveyance hose (12) shown in FIG. 6, the conveyance passage (60) has a first inner surface (60a) and a second inner surface (60b) facing each other. In this arrangement, the protrusion (52) faces the second inner surface (60b), which is positioned outward of the first inner surface (60a). Therefore, the long plate member (70) is arranged on the second inner surface (60b) of the conveyance passage (60).

The nuts (N) pressure-fed in the conveyance hose (12) are more likely to contact the second inner surface (60b) than the first inner surface (60a) due to centrifugal force acting when passing through a curved portion of the conveyance passage (60). Without the long plate member (70), the nuts (N) rub against the second inner surface (60b).

Particularly, since the protrusions (52) of the nuts (N) face the second inner surface (60b), there is a possibility that the protrusions (52) may gouge the second inner surface (60b). However, in the present embodiment, the second inner surface (60b) is provided with the metal long plate member (70), which protects the second inner surface (60b) from the protrusions (52).

Further, since the long plate member (70) is made of metal, wear by the nuts (N) which are also metal members is reduced. Further, since the long plate member (70) is elastically deformable, the long plate member (70) can be deformed according to the shape of the conveyance hose (12), even when the shape of the conveyance hose (12) is changed (e.g., from a U-shape to an S-shape).

### (7) Comparative Experiment

Next, a comparison was conducted between a conveyance hose (12) with a long plate member (70) and a conveyance hose (12) without the long plate member (70), regarding the time required for the nuts (N) to be conveyed in the conveyance hose (12) and the operating load applied to the pressure feeding device (14). Here, the time required for the conveyance is the time required for a nut (N) to move from one end to the other end of the conveyance hose (12).

Table 1 shows the nuts, the conveyance hose (12), the long plate member (70), and a speed controller (not shown) used in the comparative experiment. The long plate member (70) was arranged on the inner surface of the conveyance hose (12) that faces the protrusions (52) of the nut (N) to be conveyed. The conveyance hose (12) was arranged so that one end connected to the aligning and feeding machine (11) is lower than the other end connected to the feeder (40). The conveyance hose (12) was formed to have a curved portion so that a lowest height position of the conveyance hose (12) is lower than the aligning and feeding machine (11). Table 2 shows the results of this comparative experiment.

**[Table 1]**

| Nut type | M6 Rectangular Nut |
|---|---|
| Conveyance Hose | Rectangular Tube (Inner Diameter 6 mm x 13 mm), Length 2.5 m |
| Long Plate Member | SUS304CSP 3/4H |
| Speed Controller | Scaled In-Line Type AS-FS Series (manufactured by SMC) |

**[Table 2]**

| Conditions | Conveyance Hose | Scale of Speed Controller | Air Pressure | Average Conveyance Time |
|---|---|---|---|---|
| 1 | Without Long Plate Member | 12 | 0.4 MPa | 36.3 Seconds |
| 2 | With Long Plate Member | 12 | 0.4 MPa | 30.5 Seconds |
| 3 | With Long Plate Member | 10 | 0.4 MPa | 34.5 Seconds |
| 4 | With Long Plate Member | 8 | 0.4 MPa | 36.7 Seconds |

Comparing conditions 1 and 4, where the average conveyance times of the nuts are generally equal, the conveyance hose with the long plate requires a lower speed controller setting than the conveyance hose without the long plate. The smaller the speed controller setting, the lower the output of the pressure feeding device (14). That is, even when the average conveyance time is the same, the conveyance hose (12) with the long plate member (70) can reduce the output of the pressure feeding device (14). In this comparison, the air supply was reduced by 40 L per minute. Therefore, the conveyance hose (12) with the long plate member (70) can reduce power consumption compared to the conveyance hose without the long plate member (70).

Further, comparing conditions 1 and 2, which indicate the same speed controller setting, the average conveyance time was shorter for the conveyance hose (12) with the long plate member than for the conveyance hose without the long plate member. In this comparison, where the conveyance time for the conveyance hose without the long plate member (70) was defined as 100%, the conveyance time for the conveyance hose (12) with the long plate member (70) was 84%. That is, the conveyance time of the nuts (N) can be reduced by providing the conveyance hose (12) with the long plate member (70). In other words, when the number of nuts (N) that can be conveyed within the same period is considered, the conveyance hose (12) with the long plate member (70) can convey a greater number of nuts (N) than the hose without the long plate member (70).

### (8) Advantages of Embodiment

### (8-1) Advantage 1

The conveyance hose (12) of the present embodiment includes a resin member (65) in which a conveyance passage (60) through which nuts (N) are conveyed is formed, and a long plate member (70) arranged in the conveyance passage (60) along the longitudinal direction of the conveyance passage (60). The long plate member (70) changes its shape according to the shape of the conveyance passage (60) so that the nuts (N) slide and move on the surface of the long plate member (70) in the conveyance passage (60).

The provision of the long plate member (70) suppresses direct contact of the nuts (N) with the surface of the resin-made conveyance passage (60). This enables suppression of damage or deterioration inside the conveyance passage (60) caused by the conveyance of the nuts (N). Particularly, since the long plate member (70) changes in shape according to the shape of the conveyance passage (60), for example, providing the long plate member (70) from one end to the other end along the longitudinal direction of the conveyance passage (60) enables suppression of damage or deterioration over the entire conveyance passage (60).

Further, when the nuts (N) are pressure-fed through the conveyance passage (60) by compressed air (air pressure), the resistance due to friction between the nuts (N) and the inner surface of the conveyance passage (60) would require an increase in the air pressure of compressed air. However, in the present embodiment, such friction is reduced because the nuts (N) slide on the long plate member (70). Therefore, an increase in the air pressure of the compressed air can be suppressed, thereby reducing the duration of the use of the compressed air. As a result, the operating load of the pressure feeding device (14) can be reduced, thereby reducing power consumption. Further, since the friction between the nuts (N) and the long plate member (70) can be suppressed, the conveying speed of the nuts (N) can be increased. This enables reduction of the conveyance time of the nuts (N), as well as reduction of the amount of air and improvement in production tact.

### (8-2) Advantage 2

In the present embodiment, the conveyance hose (12) includes a resin member (65) made of a flexible material, and the long plate member (70) is made of an elastically deformable metal material. By employing a metal long plate member (70) having a relatively high hardness, it is possible to reliably suppress an increase in frictional resistance generated between the long plate member (70) and the nuts (N). In this way, increases in the operating load and power consumption of the pressure feeding device (14) can be reliably suppressed.

Further, if the long plate member (70) is not made of an elastically deformable material, the shape of the long plate member (70) would be fixed in a shape along the curved conveyance hose (12). In such a case, for example, if the conveyance hose (12) is deformed with a change in the position of the supply header (43), a long plate member (70) made of a normal (soft) material cannot follow the deformed shape. As a result, the long plate member (70) and the conveyance hose (12) become detached from each other, and the long plate member (70) lifts off from the inner surface of the conveyance passage (60). Consequently, the nuts (N) being conveyed may become clogged inside the conveyance passage (60).

In contrast, in the present embodiment, the long plate member (70) is elastically deformable, and its shape is prevented from being fixed. Therefore, the long plate member (70) can flexibly be deformed in accordance with a change in the shape of the conveyance hose (12). In other words, the long plate member (70) does not retain its pre-deformation shape (e.g., it hardly develops creases). As a result, the lift-off of the long plate member (70) from the inner surface of the conveyance passage (60) is suppressed, and the long plate member (70) can reproduce the shape of the conveyance passage (60) within the conveyance hose (12). Thus, clogging of the nuts (N) during conveyance through the conveyance passage (60) can be suppressed.

Further, since the long plate member (70) is a metal member with a certain degree of rigidity, it also serves as a support member for the conveyance hose (12). This allows, for example, sagging of the conveyance hose to be suppressed. As a result, the contact of the conveyance hose (12) with a structure arranged between the resistance welder (1) and the aligning and feeding machine (11) can be suppressed. Further, even if the conveyance hose (12) comes into contact with a structure, the presence of the long plate member (70) makes the conveyance member (12) less likely to be deformed.

### (8-3) Advantage 3

The nut (N) of the present embodiment has protrusions (52) that project from the surface of the nut (N). The long plate member (70) is arranged in the conveyance passage (60) so that the protrusions (52) contact the surface of the long plate member (70) while the nut (N) is conveyed in the conveyance passage (60). Although the protrusions (52) may damage the resin-made conveyance passage (60), provision of the long plate member (70) enables the inner surface of the conveyance passage (60) to be protected from such damage. This makes it possible to suppress deterioration of the conveyance hose (12), reduce replacement frequency of the conveyance hose (12), and shorten the time and cost needed for maintenance of the conveyance hose (12).

### (9) Variations

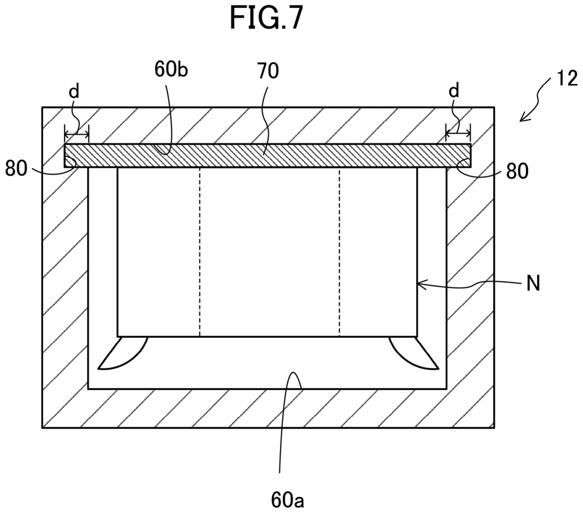

As shown in FIG. 7, the conveyance passage (60) in a variation is provided with a fixing structure (80) that fixes the long plate member (70). Specifically, the fixing structure (80) has recessed grooves (80) into which both ends of the long plate member (70) are inserted, as seen in cross section along a plane orthogonal to the longitudinal direction of the conveyance passage. The recessed grooves (80) are formed in surfaces of the conveyance passage (60) facing each other. For example, the recessed grooves (80) are formed along the second inner surface (60b).

The depth d of each of the recessed grooves (80) can be set as desired. The depth d only needs to be such that, even if the conveyance hose (12) is deformed, the long plate member (70) does not come off the recessed grooves (80). The width dimension of the plate member (70), which is orthogonal to its longitudinal direction, is equal to the width dimension of the inner surface of the conveyance passage plus 2d. For example, when the long plate member (70) is in contact with the second inner surface (60b), the long plate member (70) is formed such that its width dimension is equal to the width dimension of the second inner surface (60b) plus 2d.

### (10) Other Embodiments

The above embodiments may be configured as follows.

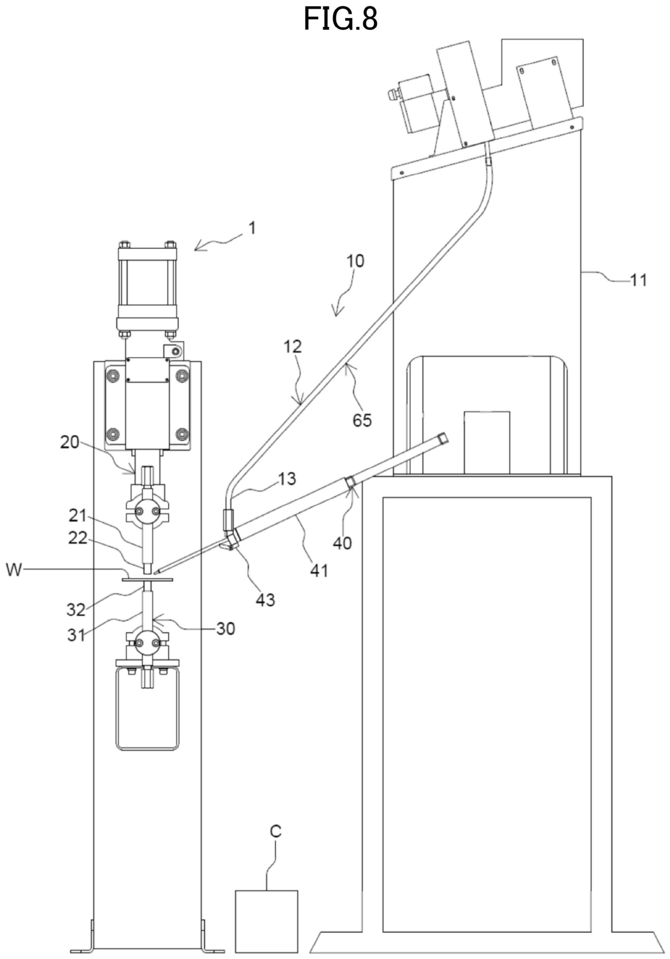

As illustrated in FIG. 8, the conveyance hose (12) of the component supply device (10) may be arranged to extend in the up-down direction. In this case, the welding position of the workpiece (W), which is the predetermined target position, is connected to the downstream end of the conveyance hose (12). The upstream end of the conveyance hose (12) is connected to the reservoir that stores components (N). In this component supply device (10), the components (N) are not pressure-fed inside the conveyance hose (12), but are conveyed from the reservoir to the welding position by gravity. In such a component supply device (10) as well, by providing the inner surface of the conveyance passage (60) with the long plate member (70), the frictional resistance is reduced when the components (N) are conveyed inside the conveyance hose (12), thereby allowing the same effect to be obtained as in the case where the components are pressure-fed. Further, the inner surface of the conveyance passage (60) can be protected.

The long plate member (70) may be provided not only on the second inner surface (60b), which comes into contact with the protrusions (52), among the inner surfaces (i.e., the conveyance passage (60)) of the conveyance hose (12), but also on the first inner surface (60a), or on other inner surfaces. For example, as illustrated in FIG. 1, when the curved portion of the conveyance hose (12) includes a lower curved portion curved downward and an upper curved portion curved upward, the long plate member (70) may be provided on the first inner surface (60a) and the second inner surface (60b). This substantially prevents the protrusions (52) of the nuts (N) from damaging the second inner surface (60b) at the lower curved portion due to centrifugal force while passing through the curved portion of the conveyance passage (60), and also reduces friction of the outer edges (54) of the upper surfaces (53) of the nuts (N) against the first inner surface (60a) in the upper curved portion, thereby improving the conveying speed of the nuts (N) and suppressing an increase in the passing time.

The long plate member (70) may be provided only in part of the conveyance passage (60). For example, the long plate member (70) may be provided at a curved portion where the nuts (N) most likely come into contact.

The cross-sectional shape of the flow path of the conveyance hose (12) is not limited to a rectangular shape and may be, for example, circular, cross-shaped, or key-shaped. In this case, the long plate member (70) is formed to conform to the shape of the inner surface of each cross-sectional shape of the flow path. The long plate member (70) may be provided on the entire surface of the inner surface of the conveyance hose (12) or only on a part of it.

The nut (N) may not have the protrusions (52).

The component (N) is not limited to the nut (N), and may be a bolt or other metal components. The shape of the nut (N) may be a polygonal shape other than a square, or may be a circular shape. The nut (N) may be a nut having a flange portion, a washer, or a collar.

The component (N) may not be conveyed by the pressure feeding device (14). In this case, for example, the aligning and feeding machine (11) may be provided at a position higher than the supply header (43), and the components may be conveyed inside the conveyance member (12) by gravity using their own weight.

The long plate member (70) does not have to be made of metal. The long plate member (70) only needs to be made of a material that is harder than the resin member (65) that constitutes the conveyance passage (60) and is elastically deformable. For example, the long plate member (70) may be made of a hard plastic that is elastically deformable.

The conveyance member (12) only needs to have a hose-like or pipe-like shape. Further, the conveyance member (12) only needs to have a shape that extends in the conveying direction of the components (N) and have an inner surface (conveyance passage (60)) on which the components (N) slide.

The conveyance member (12) only needs to be used for conveying the components (N) and does not have to be used in the resistance welder (1).

The conveyance hose (12) may be laid along the floor surface of a factory, or may be arranged in a standing posture (i.e., extending in the up-down direction) in the vicinity of the nut supply device (10).

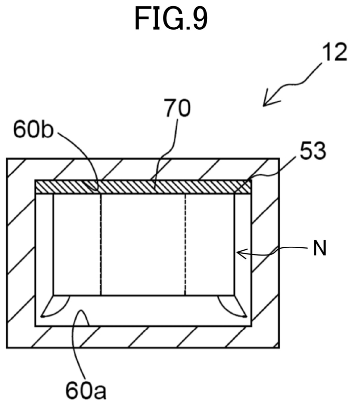

As illustrated in FIG. 9, the nut (N) may be conveyed in the conveyance hose (12) with its upper surface (53) facing the second inner surface (60b). Further, in the conveyance hose (12), nuts (N) with their upper surfaces (53) facing the second inner surface (60b) and nuts with their protrusions (52) facing the second inner surface (60b) may coexist.

In the above variation, the recessed groove (80) provided in the conveyance passage (60) may be one. That is, the recessed groove (80) may be formed on only one of the four surfaces in the conveyance passage (60). In this case, in the cross section viewed along a plane orthogonal to the longitudinal direction of the conveyance passage (60), one end of the long plate member (70) is inserted into the recessed groove (80).

In the cases where two long plate members (70) are provided, the conveyance passage (60) may be provided with recessed grooves (80) into which one or both ends of each long plate member (70) in the width direction are inserted.

The long plate member used in the comparative experiment of the above embodiment may be SUS301CSP 3/4H.

While the above-described embodiments and variations thereof have been presented, it will be understood that various changes and variations in form and detail may be made without departing from the spirit and scope of the appended claims. Further, the embodiments and variations described above may be appropriately combined or substituted with one another, provided that such changes do not impair the functions intended by the present disclosure. The terms "first", "second", and the like as used herein are employed merely for the purpose of distinguishing between elements, and are not intended to indicate any particular order or number.

### INDUSTRIAL APPLICABILITY

As described above, the present disclosure is useful for a conveyance member and a component supply device.

### DESCRIPTION OF REFERENCE CHARACTERS

- 10: Nut Supply Device (Component Supply Device)
- 12: Conveyance Hose (Conveyance Member)
- 52: Protrusion
- 60: Conveyance Passage
- 65: Resin Member
- 70: Long Plate Member
- 80: Recessed Groove
- N: Nut (Component)

## Claims

1. A conveyance member, comprising:
a resin member with a conveyance passage formed therein through which a predetermined component is conveyed; and
a long plate member arranged in the conveyance passage along a longitudinal direction of the conveyance passage, wherein
the long plate member is deformed according to a shape of the conveyance passage so that the component slides and moves on a surface of the long plate member in the conveyance passage.

2. The conveyance member of claim 1, wherein
the resin member is made of a flexible material, and
the long plate member is made of a material that is harder than the material of the resin member and is elastically deformable.

3. The conveyance member of claim 1 or 2, wherein
the component has a protrusion that projects from a surface of the component, and
the long plate member is arranged in the conveyance passage so that the protrusion contacts the surface of the long plate member while the component is conveyed in the conveyance passage.

4. The conveyance member of claim 1 or 2, wherein
the conveyance passage is provided with a fixing structure that fixes the long plate member.

5. The conveyance member of claim 4, wherein
the fixing structure is a recessed groove formed so that at least one end of the long plate member is inserted therein, as viewed in cross section along a plane orthogonal to the longitudinal direction of the conveyance passage.

6. A component supply device comprising: the conveyance member of claim 1 or 2, and configured to supply the component to a predetermined target position.

7. The component supply device of claim 6, wherein
the conveyance member is arranged to extend in an up-down direction, and
an outlet end of the conveyance member is arranged so that the component is supplied to the predetermined target position.
